# EUROPÄISCHE PATENTSCHRIFT

(11) **EP 2 036 313 B1**
(45) Veröffentlichungstag und Bekanntmachung des Hinweises auf die Patenterteilung: **03.10.2018**
(21) Anmeldenummer: 07786915.4
(22) Anmeldetag: 29.06.2007
(51) Int. Cl.: H04L 29/12, H04L 29/06

(54) **VERFAHREN ZUR VERWALTUNG VON KOMMUNIKATIONSVERBINDUNGEN ÜBER NETZWERK-ADRESSUMSETZENDE NAT NETZKNOTEN**
METHOD FOR MANAGING COMMUNICATION CONNECTIONS BY NETWORK ADDRESS TRANSLATING (NAT) NETWORK NODES
PROCÉDÉ DE GESTION DE LIAISONS DE COMMUNICATION PAR L'INTERMÉDIAIRE DE NOEUDS DE TRADUCTION D'ADRESSE RÉSEAU

(30) Priorität: 03.07.2006 DE 102006030591
(43) Veröffentlichungstag der Anmeldung: 18.03.2009
(73) Patentinhaber: Unify GmbH & Co. KG, 80807 München (DE)
(72) Erfinder: BOZIONEK, Bruno, 33178 Borchen (DE); HORVATH, Ernst, A-1060 Wien (AT); KLAGHOFER, Karl, 81373 München (DE)
(74) Vertreter: Fritzsche, Thomas
(86) Internationale Anmeldenummer: PCT/EP2007/056530
(87) Internationale Veröffentlichungsnummer: WO 2008/003644

(56) Entgegenhaltungen:
- WO-A-2005/062546
- US-A1- 2006 120 293

## Beschreibung

Die Erfindung betrifft ein Verfahren zur Verwaltung von Kommunikationsverbindungen in einem Kommunikationssystem.

Aus dem Stand der Technik sind netzadressumsetzende Netzknoten bekannt, welche in der Fachliteratur als NAT (Network Address Translation) bekannt sind. Bei einer Netzadressumsetzung werden »lokale«, also lediglich innerhalb eines ersten lokalen Netzwerkbereichs gültige Adressen, für eine Kommunikation mit Netzelementen eines externen zweiten Netzwerkbereichs umgesetzt. Als Absender- bzw. Zieladresse wird die jeweilige Adresse des sendenden bzw. des zum Empfang bestimmten Netzelements verwendet bzw. ersetzt.

Weiterhin ist ein Verfahren bekannt, mit Hilfe dessen Netzelemente innerhalb eines Netzwerkbereichs zunächst bestimmen können, ob der eigene Netzwerkbereich durch einen netzadressumsetzenden Netzknoten abgegrenzt wird und mit Hilfe dessen eine Überquerung des eigenen Netzwerkbereichs unterstützt wird. Ein solches Verfahren ist auch unter der Bezeichnung STUN (Simple Traversal of UDP over NATs) bekannt.

Eine wesentliche Operation des STUN-Protokolls besteht in einer an den STUN-Server gerichteten Abfrage der eigenen öffentlichen Netzadresse. Zusätzlich ist auch eine Abfrage nach Portnummern möglich, welche für die Abfrage im netzadressumsetzende Netzknoten zugewiesen wurden. STUN unterstützt auf diese Weise eine Zuweisung einer für den Transport folgender Nachrichten gültigen Netzadresse, z.B. IP-Adresse (Internet Protocol) und einer Portnummer.

Die oben beschriebene Zuweisung ist in den Fällen problematisch, bei denen ein Kommunikationsendpunkt mit mehreren externen Kommunikationsendpunkten in Verbindung steht. Eine solche Konstellation tritt beispielsweise dann auf, wenn ein lokales Netzwerk eine Mehrzahl von Zugängen zum weltweiten Datennetz über so genannte ISP (Internet Service Provider) aufweist, und der Kommunikationsendpunkt auf diese Weise eine Mehrzahl von öffentlichen Netzadressen nutzen muss, um über die unterschiedlichen netzadressumsetzenden Netzknoten mit einer Mehrzahl externer Kommunikationsendpunkte zu kommunizieren.

In US 2006/0120293 A1 ist ein Verfahren zur Entdeckung einer Internetadresse beschrieben, bei dem ein lokaler Client bestimmt, ob ein zwischengeschalteter Network Address Translator (NAT) zwischen einem lokalen NAT und einem öffentlichen Internet-Netzwerk angeordnet ist. Der lokale Adressrückmeldungsdienet wird aktiviert, wenn kein zwischengeschalteter NAT zwischen dem lokalen NAT und dem öffentlichen Internet angeordnet ist. Der lokale Adressrückmeldungsdienst wird deaktiviert und der zentrale Adressrückmeldungsdienst wird verwendet, wenn zwischengeschalteter NAT zwischen dem lokalen NAT und dem öffentliche Internet angeordnet ist.

In WO 2005/062546 A1 ist ein Verfahren zur Umwandlung und Überquerung einer Netzwerkadresse beschrieben, bei dem mittels eines vollständigen Proxy die Überquerung des Export-Netzwerk-Transmitters (NAT)/ der Firewall durch Weiterleiten der Rufsignalisierung und des Medienstroms von dem Benutzer-Endgerät in dem privaten Netzwerk zur gleichen Zeit erreicht wird. Das Dokument EP 1 693 998 A1 ist als Nachanmeldung zu WO 2005/062546 A1 am 23.08.2006 veröffentlicht.

Aufgabe der Erfindung ist es, Mittel bereit zu stellen, durch die eine einfache Verwaltung von Kommunikationsverbindungen unter Beteiligung mehrerer netzadressumsetzender Netzknoten ermöglicht wird.

Die der Erfindung zugrunde liegende Aufgabe wird durch ein Verfahren mit den Merkmalen des Patentanspruchs 1 gelöst.

Erfindungsgemäß wird ein Verfahren zur Verwaltung von Kommunikationsverbindungen in einem Kommunikationssystem mit einer Kommunikationseinrichtung und einem über die Kommunikationseinrichtung verbundenen internen Kommunikationsendgerät vorgeschlagen, welches in einem ersten Schritt einen Aufbau mindestens einer Bindungsanforderung mit einer kommunikationssystem-intern gültigen Quell-Netzadresse über mindestens einen netzadressumsetzenden Netzknoten (insbesondere NAT- Netzknoten) an mindestens ein kommunikationssystem-externes Kommunikationsendgerät vorsieht.

In einem weiteren Schritt erfolgt eine Entgegennahme mindestens einer Bindungsbestätigung mit mindestens einer dem kommunikationssystem-externen Kommunikationsendgerät zuordenbaren kommunikationssystem-extern gültigen Quell-Netzadresse.

In einem letzten Schritt erfolgt eine Zuordnung der mindestens einen kommunikationssystem-intern gültigen Quell-Netzadresse und der mindestens einen kommunikationssystem-extern gültigen Quell-Netzadresse zu einem dem kommunikationssystem-externen Kommunikationsendgerät zugeordneten Bindungseintrag, so dass innerhalb der durch die Kommunikationseinrichtung gebildeten Kommunikationsinfrastruktur unterschiedliche öffentliche Netzwerkadressen, die das interne Kommunikationsendgerät bzw. dessen verwaltende Kommunikationseinrichtung nutzen muss, ermittelt und in dem jeweiligen Bindungseintrag abgelegt werden, wobei für das kommunikationssystem-externe Kommunikationsendgerät zum Zeitpunkt einer Kommunikationseinleitung unmittelbar bekannt ist, welche kommunikationssystem-extern gültige Netzwerkadresse für das interne Kommunikationsendgerät der jeweilige Netzknoten dem jeweiligen kommunikationssystem-externen Kommunikationsendgerät mitteilen wird.

Durch die Zuordnung zu einem dem kommunikationssystem-externen Netzelement zugeordneten Bindungseintrag ergibt sich in besonders vorteilhafter Weise ein einfach zu verwaltender Eintrag, mit dem eine Adressierung eines kommunikationssystem-externen Netzelements, beispielsweise eines VoIP-Telefons (Voice over Internet Protocol) ermöglicht wird.

Vorteilhafte Weiterbildungen und Ausgestaltungen der Erfindung sind Gegenstand der Unteransprüche.

Ein Ausführungsbeispiels mit weiterem Vorteilen und Ausgestaltungen der Erfindung wird im Folgenden anhand der Zeichnung näher erläutert.

Dabei zeigen:
- Fig. 1: ein Strukturbild und ein zeitliches Nachrichtenaustauschdiagramm zur schematischen Darstellung eines Bezugs einer extern gültigen Netzadresse von einem Server;
- Fig. 2: Ein Strukturbild und ein zeitliches Nachrichtenablaufdiagramm zur schematischen Darstellung eines Kommunikationsaufbaus;
- Fig. 3: Eine schematische Darstellung einer Bindungstabelle mit beispielhaften Bindungseinträgen, und
- Fig. 4: eine schematische Darstellung einer Mehrzahl von Netzwerksegmenten, welche durch netzadressumsetzende Netzelemente miteinander verbunden sind.

Die eingangs erwähnte Problematik mit netzadressumsetzenden Netzknoten wird, zunächst ohne Bezugnahme auf die Zeichnung, im Folgenden anhand eines Anwendungsfalls erläutert, welcher im Speziellen mit einer paketorientierten Sprachkommunikation bzw. VoIP (Voice over IP) auftritt. Dieser exemplarische Anwendungsfall ist in Übrigen nicht als einschränkend für die Anwendung der Erfindung zu verstehen. Ein beteiligtes Netzelement wird daher fallweise auch als Kommunikationsendgerät oder Kommunikationspartner bezeichnet, ohne dass die Erfindung auf diese Ausgestaltung des Netzelements eingeschränkt wäre.

Für eine paketorientierte Sprach- oder Videokommunikation, allgemeiner Multimediakommunikation wird häufig das Protokoll SIP (Session Initiation Protocol) eingesetzt. Dabei handelt es sich um ein Protokoll zum Aufbau einer Kommunikationssitzung zwischen einer Mehrzahl von Kommunikationsendpunkten. Das SIP ist im Dokument RFC 3261 (Request for Comment) der IETF (Internet Engineering Task Force) spezifiziert und wird eingesetzt, um die jeweiligen an der Kommunikation beteiligten Kommunikationsendpunkte zu bestimmen und die Kommunikationssitzung aufzubauen.

Der eigentliche Austausch von Kommunikationsdaten erfolgt über das Session Description Protocol (SDP) sowie dem Realtime Transport Protocol (RTP). Die Aufgabe des SDP besteht darin, zwischen den Kommunikationsendpunkten zu verwendende Codecs, Transportprotokolle usw. auszuhandeln. Das RTP bestimmt schließlich den Austausch der eigentlichen Kommunikationsdaten bzw. Nutzdaten oder »Payload« zwischen den Kommunikationsendpunkten. Der Ausdruck Nutzdaten bzw. Payload bezeichnet dabei die Daten eines Datenpakets, die im Allgemeinen keine weiteren für die Kommunikationssitzung notwendigen Steuer-oder Protokollinformationen beinhalten.

Erfolgt eine paketorientierte Sprachkommunikation über einen jeweiligen Netzwerkbereich hinaus, d.h. unter Beteilung von Kommunikationsendpunkten, welche jenseits des lokalen Netzwerkbereichs vorgesehen sind, treten bei Einsatz des SIP mehrere Probleme auf, welche im Folgenden kurz umrissen werden.

Für den Austausch von Kommunikationsdaten zwischen zwei Endpunkten ist in Anwendung von RTP ein Transport des Datenstroms mit dem Protokoll UDP (User Datagram Protocol) vorgesehen. Für die Übertragung der Kommunikationsdaten verwendete UDP-Ports werden dynamisch vergeben, was die Verwendung von SIP in Verbindung mit Firewalls, NAT-Router oder NAT-»Boxes« - im folgenden netzadressumsetzende Netzknoten - schwierig gestaltet, da die meisten netzadressumsetzenden Netzknoten die dynamisch vergebenen UDP-Ports nicht der Signalisierungsverbindung zuordnen können.

Zur Umgehung dieses Problems wird beispielsweise das Protokoll STUN (Simple Traversal over UDP trough NATs) eingesetzt, das eine Erkennung von netzadressumsetzenden Netzknoten entlang der aufzubauenden Kommunikationsstrecke ermöglicht und die durch die netzadressumsetzenden Netzknoten vorgegebenen Grenzen zwischen dem lokalen Netzwerkbereich und dem jenseits dieses lokalen Netzwerkbereichs liegenden Kommunikationsendpunkt überwinden kann.

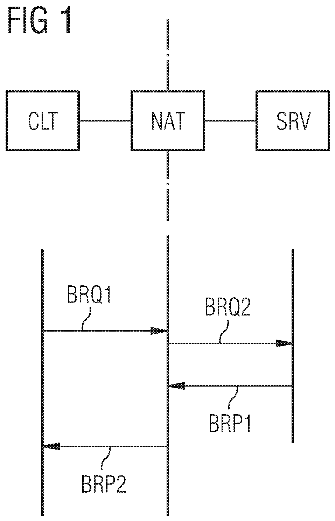

Das entsprechende Verfahren wird anhand von Fig. 1 erläutert. Fig. 1 zeigt ein Netzelement CLT, das über einen netzwerkadressumsetzenden Netzknoten NAT mit einem Server SRV verbunden ist. Der Server SRV sei - ausschließlich oder unter anderem - zur serverseitigen Abarbeitung des STUN-Protokolls eingerichtet und wird im Folgenden auch als STUN-Server bezeichnet. Ein mit dem STUN-Protokoll einhergehender Nachrichtenaustausch umfasst z.B. eine vom Netzelement CLT ausgehende erste Bindungsanforderung BRQ1, welche im Netzknoten NAT terminiert und in Form einer zweiten Bindungsanforderung BRQ2 an den Server SRV gesendet wird. In entsprechender Weise sendet der Server SRV eine erste Bindungsbestätigung BRP1, welche am Netzknoten NAT terminiert und in Form einer zweiten Bindungsbestätigung BRP2 an das Netzelement CLT übermittelt wird. Unter einer »Terminierung« einer Nachricht an einem Netzelement wird dabei verstanden, dass die entsprechende Nachricht am jeweiligen Netzelement endet, also dort ausgewertet wird, und eine »weitergereichte« Nachricht vom jeweiligen Netzelement neu zusammengestellt wird.

Im Folgenden wird davon ausgegangen, dass das Netzelement CLT eine lokal gültige Quell-Netzadresse X bzw. eine lokal gültige Portnummer x aufweist. Die Kombination aus Quell-Netzadresse und Portnummer des Netzelements CLT wird in Form der Notation X:x in einem Nachrichtenkopfeintrag bzw. Header der ersten Bindungsanforderung BRQ1 eingesetzt.

Als Ziel-Netzadresse bzw. Ziel-Portnummer der ersten Bindunganforderung BRQ1 - üblicherweise auch als »Destination« bezeichnet - ist die entsprechende Kombination des Servers SRV in Form der Notation P:p eingetragen. Der als Ziel vorgesehene Server ist also durch die Netzadresse P bzw. durch die Portnummer p gekennzeichnet.

Der Netzknoten NAT empfängt die erste Bindungsanforderung BRQ1 und nimmt bezüglich der Quell-Netzadresse X und bezüglich des Quell-Ports x eine Netzadressumsetzung (Network Address Translation) vor und leitet die Bindungsanforderung in Form der zweiten Bindungsanforderung BRQ2 über die Grenze des lokalen Netzwerks an den Server SRV weiter.

Die veränderte Bindungsanforderungsnachricht BRQ2 ist dadurch gekennzeichnet, dass die ursprüngliche Quellnetzwerkadresse X durch eine veränderte Quell-Netzwerkadresse A ersetzt wurde. Die geänderte Quell-Netzwerkadresse A entspricht dabei der Netzwerkadresse des Netzknotens. Das Vorgesagte gilt in analoger Weise für die Portnummer, welche in a geändert wurde.

Im Zuge einer Weiterleitung der Bindungsanforderung BRQ1 reserviert der Netzknoten NAT ein so genanntes »Pin Hole« wobei eine Bindung mit einer Vormerkung der verwendeten Netzadresse bzw. des verwendeten Ports vermerkt wird.

Diese Bindung lautet in diesem Fall in einer entsprechenden üblichen Notierung (X,x)<-->(A,a). Diese Bindung führt dazu, dass jedes eintreffende Datenpaket mit einer Zieladresse A:a zu einem Netzelement CLT mit der Netzwerkadresse X:x übermittelt wird, und umgekehrt, dass in einem abgehenden Datenpaket die Absenderadresse X:x auf A:a geändert wird. Die zeitliche Dauer einer solchen Bindung wird üblicherweise seitens des Netzknotens NAT begrenzt und kann bei Bedarf in periodischen Abständen erneuert werden.

Der Server SRV antwortet mit einer ersten Bindungsbestätigungsnachricht BRP1, welche in der vorgenannten Weise mit einer Netzwerkadressenumsetzung in Form einer zweiten Bindungsbestätigung BRP2 an das Netzelement CLT übermittelt wird.

Wird das Netzelement CLT für eine paketorientierte Sprachkommunikation eingesetzt, kann nun eine auf dem Netzelement CLT zum Ablauf gebrachte SIP-Applikation eine extern gültige Netzwerkadresse zu einem - nicht dargestellten - SIP Proxy Server senden.

Im Folgenden wird unter weiterer Bezugnahme auf die Funktionseinheiten der Fig. 1 ein Kommunikationsaufbau zu einem Netzelement außerhalb des lokalen Netzwerkbereichs erklärt.

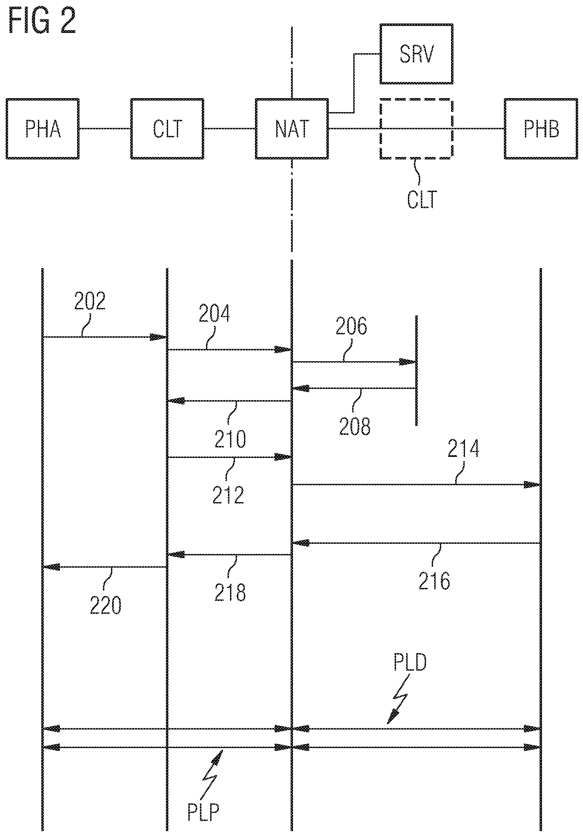

Fig. 2 zeigt den aus Fig. 1 bekannten Netzknoten sowie den aus Fig. 1 bekannten Server SRV. Im Unterschied zum Ausführungsbeispiel gemäß Fig. 1 kommuniziert das dortige Netzelement CLT nicht direkt mit dem Netzknoten NAT. Im Ausführungsbeispiel der vorliegenden Fig. 2 ist stattdessen ein über eine Kommunikationseinrichtung CLT verbundenes erstes Kommunikationsendgerät PHA vorgesehen. Die Kommunikationseinrichtung CLT weist ein identisches Bezugszeichen zu dem aus Fig. 1 bekannten Netzelement CLT auf, um zum Ausdruck zu bringen, dass die Kommunikationseinrichtung CLT bestimmte Funktionen anstelle des ersten Kommunikationsendgeräts PHA übernimmt, welche im Ausführungsbeispiel der Fig. 1 durch das dortige Netzelement CLT selbst ausgeführt werden mussten.

Bei dem ersten Kommunikationsendgerät PHA handelt es sich um ein beliebiges Netzelement, zur Beschreibung der Erfindung anhand einer Kommunikationsumgebung wird im Folgenden in einer nicht einschränkend zu verstehenden Weise davon ausgegangen, dass das erste Kommunikationsendgerät PHA als VoIP-Kommunikationsendgerät ausgeführt ist. In entsprechender Weise ist die Kommunikationseinrichtung CLT für eine paketorientierte Vermittlung und Verwaltung einer Vielzahl - nicht dargestellter - paketorientiert kommunizierender Kommunikationsendgeräte vorgesehen. Die Kommunikationseinrichtung CLT ist üblicherweise mit einer Mehrzahl von Netzknoten verbunden, wobei in der Zeichnung aus Übersichtsgründen lediglich ein erster Netzknoten NAT dargestellt ist. Aus Übersichtlichkeitsgründen sind weitere mögliche Verbindungen des Netzknotens NAT, z.B. zu einem Internet Service Provider (ISP) sowie zu weiteren - nicht dargestellten - in andere Netzwerkbereiche führende Netzknoten nicht dargestellt.

Der Netzknoten NAT ist in der aus Figur 1 bekannten Weise mit einem STUN-Server SRV verbunden. Der Netzknoten NAT ist weiterhin mit einem zweiten Kommunikationsendgerät PHB verbunden, für dessen technische Ausgestaltung im Wesentlichen das zum ersten Kommunikationsendgerät PHA gesagte gilt. Insbesondere kann das zweite Kommunikationsendgerät PHB in analoger Weise über eine Kommunikationseinrichtung CLT mit dem Netzknoten NAT verbunden sein. Dies ist jedoch für die weitere Verfahrensbeschreibung nicht von Belang, weshalb die Kommunikationseinrichtung CLT auf Seiten des zweiten Kommunikationsendgeräts PHB in der Zeichnung strichliert dargestellt ist. Das im unteren Bereich der Figur 2 dargestellte Ablaufdiagramm bezieht sich somit nicht auf die strichliert dargestellte Kommunikationseinrichtung CLT, sondern auf den Server SRV.

Im Folgenden wird auf das Ablaufdiagramm ausgetauschter Nachrichten in der unteren Hälfte der Fig. 2 Bezug genommen.

Im Zuge einer Einrichtung eines Kommunikationsaufbaus ausgehend vom ersten Kommunikationsendgerät PHA wird von diesem eine Einladungsnachricht 202 »Invite« an die Kommunikationseinrichtung CLT gesendet. Die Kommunikationseinrichtung CLT leitet nun eine Bindungsanforderung unter Beteiligung des Netzknotens NAT ein, welche von den Nachrichten 204, 206, 208, 210 begleitet wird, die im wesentlichen mit den aus Fig. 1 bekannten Bindungsanforderungs- bzw. Bindungsbestätigungsnachrichten BRQ1, BRQ2, BRP1, BRP2 identisch sind.

Nach erfolgter Bindung seitens des Netzknotens NAT sendet die Kommunikationseinrichtung CLT eine modifizierte Einladungsnachricht 212 an den Netzknoten NAT. Die modifizierte Einladungsnachricht unterscheidet sich von der vom ersten Kommunikationsendgerät PHA gesendeten Einladungsnachricht 202 dadurch, dass in der modifizierten Einladungsnachricht 212 die durch die Bindung definierten entsprechenden »öffentlichen« Netzwerkadressen bezüglich der Nutzdatenverbindung enthalten sind. Die am Netzknoten NAT erhaltene Einladungsnachricht 212 wird nach Ausführung der üblichen Netzwerkadressenumsetzung in Form der abermals modifizierten Einladungsnachricht 214 an das vorgesehene Ziel, nämlich das zweite Kommunikationsendgerät PHB gesendet. Ein weiterer Verlauf des Kommunikationsaufbaus entspricht im Wesentlichen den Vorgaben des SIP-Protokolls, im Zuge dessen optional weitere - nicht dargestellte - Nachrichten ausgetauscht werden.

Zur Bestätigung der Bereitschaft eines Verbindungsaufbaus durch das zweite Kommunikationsendgerät PHB wird von diesem eine Bestätigungsnachricht 216 gesendet, welche - nach einer entsprechenden Adressumsetzung durch den Netzknoten NAT - in Form einer modifizierten Bestätigungsnachricht 218 vom Netzknoten NAT an die Kommunikationseinrichtung CLT weitergeleitet wird. Daraufhin wird eine Bestätigungsnachricht 220 von der Kommunikationseinrichtung CLT an das erste Kommunikationsendgerät PHA übermittelt, woraufhin nun alle Voraussetzungen für den Austausch von Nutzdaten in einer Kommunikationssitzung erfüllt sind. Das erste Kommunikationsendgerät PHA tauscht nunmehr mit dem zweiten Kommunikationsendgerät PHB bidirektional Nutzdaten PLD aus, welche zeichnerisch durch mehrere Doppelpfeile dargestellt sind.

Zur Vereinfachung wurde in Fig. 2 lediglich ein externer Kommunikationspartner des ersten Kommunikationsendgeräts PHA in Gestalt des zweiten Kommunikationsendgeräts PHB unterstellt. Für einen realistischen Fall einer Kommunikationsumgebung mit mehr als einem Zugang zum weltweiten Datennetz und/oder mit mehreren Zugängen zu mehreren SIP-Providern und/oder über mehr als einem Netzknoten NAT ergibt sich stattdessen eine Situation, bei der ein Kommunikationsendgerät PHA bzw. dessen verwaltende Kommunikationseinrichtung CLT mehr als eine öffentliche Netzwerkadresse nutzen muss, um über die unterschiedlichen Netzwerkbereiche bzw. unterschiedlichen Netzknoten NAT mit mehreren externen Kommunikationsendgeräten zu kommunizieren.

Das erfindungsgemäße STUN Client Management sieht nun innerhalb der im wesentlichen durch die Kommunikationseinrichtung CLT gebildeten Kommunikationsinfrastruktur vor, dass die unterschiedlichen öffentlichen Netzwerkadressen ermittelt und in einem jeweiligen Bindungseintrag abgelegt werden. Eine solche Ermittlung erfolgt nicht - wie bislang üblich - in einer situativen Weise, also ad hoc, sondern vorab und damit in einfacher Weise zugreifbar. Die Ermittlung wird dabei eventuell in periodischen Zeitpunkten wiederholt, um ablaufgefährdete Bindungen vor deren Ablauf wieder zu erneuern. Auf diese Weise ist für jedes externe Kommunikationsendgerät PHB zum Zeitpunkt der Kommunikationseinleitung unmittelbar bekannt, welche externe Netzwerkadresse bzw. welche externe Portnummer für das interne Kommunikationsendgerät PHA der jeweilige Netzknoten NAT dem jeweiligen externen Kommunikationsendgerät PHB mitteilen wird.

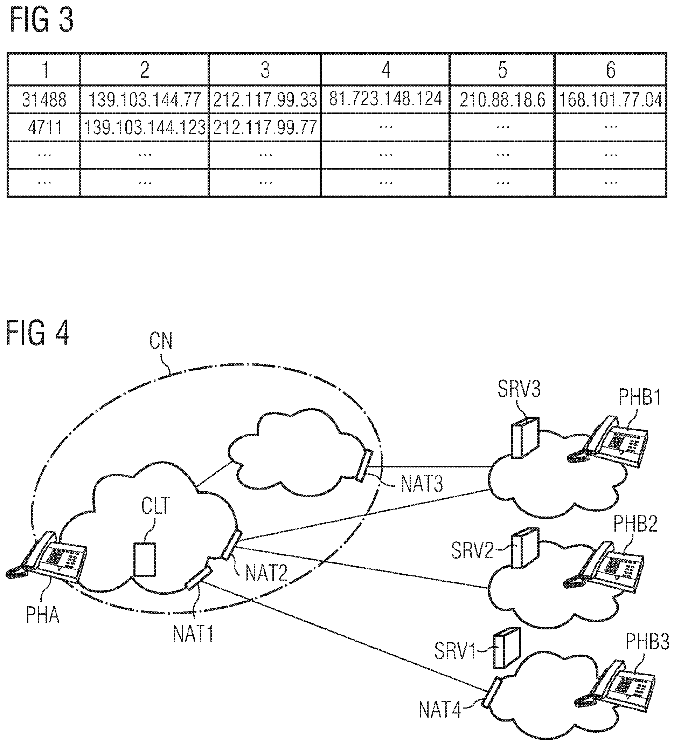

Fig. 3 zeigt eine Zusammenstellung mehrerer Bindungseinträge in einer Bindungstabelle. Die Bindungstabelle weist in einer ersten Spalte 1 eine Identifizierung des kommunikationssystem-externen Netzelements auf. Im vorliegenden Ausführungsbeispiel wird das kommunikationssystem-externe Netzelement bzw. das Kommunikationsendgerät durch dessen Rufnummer charakterisiert. In der ersten Spalte 1 der Bindungstabelle stehen exemplarisch die Rufnummern 31488 und 4711.

In einer zweiten Spalte 2 ist zu einem jeweiligen Bindungseintrag 31488, 4711 eine innerhalb des eigenen Netzwerkbereichs bzw. innerhalb des eigenen Kommunikationssystems gültige Netzwerkadresse bzw. IP-Adresse eingetragen.

In entsprechender Weise ist in der dritten Spalte 3 eine für einen ersten Netzwerkbetreiber bzw. ISP gültige externe Netzwerkadresse, sowie in der vierten Spalte 4 eine für einen zweiten Netzwerkbetreiber gültige externe Netzwerkadresse eingetragen.

Schließlich sind in den Spalten 5 und 6 weitere Netzwerkadressen, welche beispielsweise alternative Netzwerkbetreiber adressieren, vorgesehen.

Fig. 4 zeigt ein Kommunikationssystem CN, bestehend aus einer Kommunikationseinrichtung CLT, an die mehrere Kommunikationsendgeräte angeschlossen sind. In der Zeichnung ist wiederum lediglich das erste Kommunikationsendgerät PHA exemplarisch dargestellt. Zur Anbindung weiterer - ohne Bezugszeichen und als »Wolken« dargestellter - Kommunikationssysteme, welche im Sprachgebrauch der bisherigen Ausführungen als kommunikationssystem-extern zu bezeichnen sind, sind ein erster, ein zweiter und ein dritter netzadressumsetzender Netzknoten NAT1, NAT2, NAT3 vorgesehen.

In Richtung zu einem ersten kommunikationssystem-externen Kommunikationspartner PHB1 ist eine Verbindung über den dritten Netzknoten NAT3 dargestellt. Eine optionale weitere Verbindung über einen alternativen ISP ist über den zweiten Netzknoten NAT2 dargestellt. In Richtung zu einem zweiten kommunikationssystem-externen Kommunikationspartner PHB2 ist eine Verbindung über den zweiten Netzknoten NAT2 dargestellt. In Richtung zu einem dritten kommunikationssystem-externen Kommunikationspartners PHB3 ist eine Verbindung über den ersten Netzknoten NAT1 sowie über einen weiteren Netzknoten NAT4 auf Seiten des Kommunikationssystems des kommunikationssystem-externen Kommunikationspartners PHB3 dargestellt. Weitere Server SRV1, SRV2, SRV3 sind den jeweiligen externen Kommunikationssystemen zugeordnet.

Mit den erfinderischen Mitteln zur Verwaltung von Kommunikationsverbindungen ist es nunmehr möglich, eine Selektion der Richtung des Kommunikationsaufbaus hin zum Kommunikationssystem-externen Kommunikationsendgerät in Form von einem Kommunikationseinrichtungs-internen »Call Processing« bzw. »Feature Processing« zu definieren. Für einen Rufaufbau ausgehend vom ersten Kommunikationsendgerät PHA unter Verwendung des Protokolls SIP zu einem externen Kommunikationspartner, z.B. des kommunikationssystem-externen Kommunikationspartners PHB3 wird aufgrund eines Leistungsmerkmals bzw. »Feature« innerhalb der Kommunikationseinrichtung CLT eine entsprechende Richtung selektiert, welche unter Beteiligung der Bindungseinträge für diesen externen Kommunikationspartner ausgewählt wird.

Mit den Mitteln der Erfindung ergibt sich damit ein weiterer Vorteil, dass diese Richtungsentscheidung auch für weitere Leistungsmerkmale wie Least Cost Routing, Call Admission Control, Auswahl einer Rufrichtung über eine Kennzahl usw. ermöglicht wird. Über die Richtungsentscheidung wird somit auch ein entsprechender Netzknoten NAT1, NAT2, NAT3 bestimmt, über den der Ruf geleitet wird. Eine Auswahl der zugehörigen externen Netzwerkadresse erfolgt dabei implizit. Das erfindungsgemäße Verfahren zur Verwaltung von Kommunikationsverbindungen übernimmt hierbei die entsprechende Auswahl für den zu rufenden Kommunikationsteilnehmer.

Es versteht sich, dass andere Ausführungsformen alternative NAT-Techniken einsetzen. Dies umfasst auch alternative Protokolle zum genannten STUN. Beispielsweise können auch Protokolle wie Internet Connectivity Establishment (ICE) oder Traversal Using Relay NAT (TURN) eingesetzt werden.

## Patentansprüche

1. Verfahren zur Verwaltung von Kommunikationsverbindungen in einem Kommunikationssystem (CN) mit einer Kommunikationseinrichtung (CLT) und einem über die Kommunikationseinrichtung (CLT) verbundenen internen Kommunikationsendgerät (PHA), umfassend folgende Schritte:
a) Aufbau einer Bindungsanforderung mit einer kommunikationssystem-intern gültigen Quell-Netzadresse über mindestens einen netzadressumsetzenden Netzknoten (NAT, NAT1, NAT2, NAT3) an ein kommunikationssystem-externes Kommunikationsendgerät (PHB, PHB1, PHB2, PHB3),
b) Entgegennahme einer Bindungsbestätigung mit einer dem kommunikationssystem-externen Kommunikationsendgerät (PHB, PHB1, PHB2, PHB3) zugeordneten kommunikationssystem-extern gültigen Netzadresse,
c) Zuordnung der kommunikationssystem-intern gültigen Quell-Netzadresse und der kommunikationssystem-extern gültigen Netzadresse zu einem dem kommunikationssystem-externen Kommunikationsendgerät (PHB, PHB1, PHB2, PHB3) zugeordneten Bindungseintrag, so dass innerhalb der durch die Kommunikationseinrichtung (CLT) gebildeten Kommunikationsinfrastruktur unterschiedliche öffentliche Netzwerkadressen, die das interne Kommunikationsendgerät (PHA) bzw. dessen verwaltende Kommunikationseinrichtung (CLT) nutzen muss, ermittelt und in dem jeweiligen Bindungseintrag abgelegt werden, wobei die Bindungseinträge in einer Bindungstabelle zusammengestellt werden, und
wobei für einen Rufaufbau unter Verwendung des SIP-Protokolls ausgehend von dem internen Kommunikationsendgerät (PHA) zu einem kommunikationssystem-externen Kommunikationsendgerät (PHB, PHB1, PHB2, PHB3) aufgrund eines Leistungsmerkmals innerhalb der Kommunikationseinrichtung (CLT) eine entsprechende Richtung selektiert wird, welche unter Beteiligung der Bindungseinträge aus der Bindungstabelle für diesen externen Kommunikationspartner ausgewählt wird.

2. Verfahren nach Anspruch 1, wobei
die Schritte a) bis c) wiederholt
- für eine Vielzahl unterschiedlicher kommunikationssystem-intern gültige Quell-Netzadressen des Kommunikationssystems (CN) und/oder
- für eine Vielzahl unterschiedlicher netzadressumsetzender Netzelemente (NAT1, NAT2, NAT3)
durchgeführt werden und die so entstehende Vielzahl von Bindungseinträgen in eine Bindungstabelle eingetragen werden.

3. Verfahren nach Anspruch 1 oder 2, wobei
eine Kommunikationsumgebung für das interne Kommunikationsendgerät (PHA) mehr als einen Zugang zum weltweiten Datennetz und/oder mehrere Zugänge zu mehreren SIP-Providern und/oder über mehr als einen Netzknoten (NAT, NAT1, NAT2, NAT3) umfasst.

4. Verfahren nach einem der vorherigen Ansprüche, wobei innerhalb der durch die Kommunikationseinrichtung (CLT) gebildeten Kommunikationsinfrastruktur das interne Kommunikationsendgerät (PHA) bzw. dessen verwaltende Kommunikationseinrichtung (CLT) die unterschiedlichen öffentlichen Netzwerkadressen nutzen muss, um über die unterschiedlichen Netzwerkbereiche bzw. unterschiedlichen Netzknoten (NAT, NAT1, NAT2, NAT3) mit den mehreren externen Kommunikationsendgeräten (PHB, PHB1, PHB2, PHB3) zu kommunizieren.

5. Verfahren nach einem der vorherigen Ansprüche, wobei in der Bindungstabelle zur Zuordnung der kommunikationssystem-intern gültigen Quell-Netzadresse und der kommunikationssystem-extern gültigen Netzadresse zu dem dem kommunikationssystem-externen Kommunikationsendgerät (PHB, PHB1, PHB2, PHB3) zugeordneten Bindungseintrag mehrere Bindungseinträge zusammengestellt sind und die Bindungstabelle eine Identifizierung des kommunikationssystem-externen Kommunikationsendgerätes (PHB, PHB1, PHB2, PHB3) in Form von dessen Rufnummer aufweist.

6. Verfahren nach Anspruch 5, wobei
die Bindungstabelle die Identifizierung des kommunikationssystem-externen Kommunikationsendgerätes (PHB, PHB1, PHB2, PHB3) in einer ersten Spalte aufweist und in einer zweiten Spalte der Bindungstabelle zu einem jeweiligen Bindungseintrag in der ersten Spalte eine innerhalb des eigenen Netzwerkbereichs bzw. innerhalb des eigenen Kommunikationssystems gültige Netzwerkadresse bzw. IP-Adresse eingetragen ist.

7. Verfahren nach Anspruch 6, wobei
in einer dritten Spalte der Bindungstabelle zu einem jeweiligen Bindungseintrag in der ersten Spalte eine für einen ersten Netzwerkbetreiber bzw. ISP gültige externe Netzwerkadresse, und in einer vierten Spalte eine für einen zweiten Netzwerkbetreiber gültige externe Netzwerkadresse eingetragen ist.

8. Verfahren nach Anspruch 7, wobei in fünften und sechsten Spalten der Bindungstabelle weitere Netzwerkadressen, welche beispielsweise alternative Netzwerkbetreiber adressieren, vorgesehen sind.

9. Computerprogrammprodukt mit Programmkode zur Durchführung des Verfahrens nach einem der vorgenannten Ansprüche, wenn das Computerprogrammprodukt auf einer Kommunikationseinrichtung (CLT) zur Verwaltung eines Kommunikationsendgeräts (PHA) abläuft.

## Claims

1. A method for managing communication connections in a in a communication system (CN) with a communication device (CLT) and an internal communication terminal (PHA) connected by the communication device (CLT), comprising the following steps:
a) Construction of a linking request with a communication-system, internally valid source network address by at least one network translating network node (NAT, NAT1, NAT2, NAT3) to a communication system external communication terminal (PHB, PHB1, PHB2, PHB3),
b) Receiving a linking confirmation with a communication system externally valid network address associated with the communication system external communication terminal (PHB, PHB1, PHB2, PHB3),
c) Association of the communication system internally valid source network address and of the communication system externally valid network address to a linking entry associated with the communication system external communication terminal (PHB, PHB1, PHB2, PHB3) so that different public network addresses formed within the communication infrastructure formed by the communication device (CLT) and which must use the internal communication terminal (PHA) and its managing communication device (CLT) are determined and filed in the particular linking entry, wherein the linking entries are assembled in a linking table, and wherein for a call setup using the SIP protocol, starting from the internal communication terminal (PHA) to a communication system-external communication terminal (PHB, PHB1, PHB2, PHB3) based on a performance feature inside the communication device (CLT), an appropriate direction is selected which is selected with the participation of the linking entries from the linking table for this external communication partner.

2. The method according to Claim 1, wherein the steps a) to c) are carried out in a repeated manner
- for a plurality of different communication system, internally valid source network addresses of the communication system (CN) and/or
- for a plurality of different network address translating network elements (NAT1, NAT2, NAT3)
and the plurality of linking entries produced in this manner are entered into a linking table.

3. The method according to Claim 1 or 2, wherein a communication environment for the internal communication terminal (PHA) comprises more than one access to the worldwide data network and or several accesses to several SIP providers and comprises more than one network node (NAT, NAT1, NAT2, NAT3) .

4. The method according to one of the previous claims, wherein inside the communication infrastructure formed by the communication device (CLT) the internal communication terminal (PHA) and its managing communication device (CLT) must use the different public network addresses in order to communicate by the different network ranges or different network nodes (NAT, NAT1, NAT2, NAT3) with the several external communication devices (PHB, PHB1, PHB2, PHB3).

5. The method according to one of the previous claims, wherein several linking entries are assembled in the linking table for associating the communication system, internally valid source network address and the communication system, externally valid network address with the linking entry associated with the communication system external communication terminal (PHB, PHB1, PHB2, PHB3), and the linking table comprises an identification of the communication system external communication terminal (PHB, PHB1, PHB2, PHB3) in the form of its call number.

6. The method according to Claim 5, wherein
the linking table comprises the identification of the communication system external communication terminal (PHB, PHB1, PHB2, PHB3) in a first column and in a second column of the linking table a network address or IP address valid within its own communication system or within its own communication system is entered for a particular linking entry in the first column.

7. The method according to Claim 6, wherein
an external network address valid for a first network operator or ISP is entered in a third column of the linking table for a particular linking entry in the first column and an external network address valid for a second network operator is entered in a fourth column.

8. The method according to Claim 7, wherein other network addresses which address, for example, alternative network operators are provided in fifth and sixth columns of the linking table.

9. A computer program product with program code for carrying out the method according to one of the previously cited claims when the computer program product is running on a communication device (CLT) for managing a communication terminal (PHA).

## Revendications

1. Procédé de gestion de liaisons de communication dans un système de communication (CN) avec un dispositif de communication (CLT) et un terminal de communication interne (PHA) relié par l'intermédiaire du dispositif de communication (CLT), comprenant les étapes suivantes :
a) établissement d'une demande de liaison avec une adresse réseau source valide interne au système de communication par l'intermédiaire d'au moins un noeud de traduction d'adresse réseau (NAT, NAT1, NAT2, NAT3) au niveau d'un terminal de communication externe au système de communication (PHB, PHB1, PHB2, PHB3),
b) réception d'une confirmation de liaison avec une adresse réseau valide externe au système de communication attribuée au terminal de communication externe au système de communication (PHB, PHB1, PHB2, PHB3),
c) attribution de l'adresse réseau source valide interne au système de communication et de l'adresse réseau valide externe au système de communication à une entrée de liaison attribuée au terminal de communication externe au système de communication (PHB, PHB1, PHB2, PHB3), de sorte qu'à l'intérieur de l'infrastructure de communication formée par le dispositif de communication (CLT), différentes adresses réseau publiques, que le terminal de communication interne (PHA) ou son dispositif de communication de gestion (CLT) doit utiliser, sont déterminées et déposées dans l'entrée de liaison respective, dans lequel les entrées de liaison sont compilées dans un tableau de liaison, et
dans lequel pour un établissement d'appel en utilisant le protocole SIP partant du terminal de communication interne (PHA) à un terminal de communication externe au système de communication (PHB, PHB1, PHB2, PHB3) en raison d'une caractéristique de puissance à l'intérieur du dispositif de communication (CLT), une direction correspondante est sélectionnée, laquelle est sélectionnée avec la participation des entrées de liaison du tableau de liaison pour ce partenaire de communication externe.

2. Procédé selon la revendication 1, dans lequel les étapes a) à c) sont répétées
- pour une pluralité de différentes adresses réseau source valides internes au système de communication du système de communication (CN) et/ou
- pour une pluralité de différents éléments de réseau de traduction d'adresse réseau (NAT1, NAT2, NAT3)
et la pluralité d'entrées de liaison ainsi créée est entrée dans le tableau de liaisons.

3. Procédé selon la revendication 1 ou 2, dans lequel un environnement de communication pour le terminal de communication interne (PHA) comprend plus d'un accès au réseau de données mondial et/ou plusieurs accès à plusieurs fournisseurs SIP et/ou plus d'un noeud (NAT, NAT1, NAT2, NAT3).

4. Procédé selon l'une quelconque des revendications précédentes, dans lequel à l'intérieur de l'infrastructure de communication formée par le dispositif de communication (CLT), le terminal de communication interne (PHA) ou son dispositif de communication de gestion (CLT) doit utiliser les différentes adresses réseau publiques pour communiquer avec les plusieurs terminaux de communication externes (PHB, PHB1, PHB2, PHB3) par l'intermédiaire des différentes zones de réseau ou différents noeuds (NAT, NAT1, NAT2, NAT3).

5. Procédé selon l'une quelconque des revendications précédentes, dans lequel dans le tableau de liaison pour l'attribution de l'adresse réseau source valide interne au système de communication et de l'adresse réseau valide externe au système de communication à l'entrée de liaison attribuée au terminal de communication externe au système de communication (PHB, PHB1, PHB2, PHB3), plusieurs entrées de liaison sont regroupées et le tableau de liaison présente une identification du terminal de communication externe au système de communication (PHB, PHB1, PHB2, PHB3) sous forme de son numéro d'appel.

6. Procédé selon la revendication 5, dans lequel le tableau de liaison présente l'identification du terminal de communication externe au système de communication (PHB, PHB1, PHB2, PHB3) dans une première colonne et dans une deuxième colonne du tableau de liaison pour une entrée de liaison respective dans la première colonne, une adresse IP ou adresse réseau valide à l'intérieur de la propre zone de réseau ou à l'intérieur du propre système de communication.

7. Procédé selon la revendication 6, dans lequel une adresse réseau externe valide pour un premier exploitant de réseau ou ISP est entrée dans une troisième colonne du tableau de liaison pour une entrée de liaison respective dans la première colonne, et une adresse réseau externe valide pour un deuxième exploitant de réseau est entrée dans une quatrième colonne.

8. Procédé selon la revendication 7, dans lequel d'autres adresses réseau, lesquelles adressent par exemple d'autres exploitants de réseau, sont prévues dans des cinquième et sixième colonnes du tableau de liaison.

9. Produit de programme informatique avec code de programme pour la réalisation du procédé selon l'une quelconque des revendications précédentes, lorsque le produit de programme informatique est exécuté sur un dispositif de communication (CLT) pour la gestion d'un terminal de communication (PHA).
